# EUROPÄISCHE PATENTSCHRIFT

(11) **EP 3 530 809 B1**
(45) Veröffentlichungstag und Bekanntmachung des Hinweises auf die Patenterteilung: **16.12.2020**
(21) Anmeldenummer: 18157798.2
(22) Anmeldetag: 21.02.2018
(51) Int. Cl.: E02B 17/00, E02B 17/02, F03D 13/25

(54) **VERBINDUNGSSTRUKTUR FÜR EINE MEERESINSTALLATION**
CONNECTING STRUCTURE FOR A MARINE INSTALLATION
STRUCTURE DE RACCORDEMENT POUR UNE INSTALLATION MARINE

(43) Veröffentlichungstag der Anmeldung: 28.08.2019
(73) Patentinhaber: Siemens Aktiengesellschaft, 80333 München (DE)
(72) Erfinder: Steinhoff, Thorsten, 22043 Hamburg (DE); Dallinger, Wolfgang, 21493 Schwarzenbek (DE)

(56) Entgegenhaltungen:
- EP-A1- 2 597 227
- WO-A1-2010/103114
- WO-A1-2015/019664
- GB-A- 2 473 058
- KR-A- 20150 145 978
- US-A1- 2014 147 272

## Beschreibung

Die vorliegende Erfindung betrifft eine Meeresinstallation mit einer Verbindungsstruktur zum Verbinden einer Meeresgrundverankerung mit einem Aufbau für elektrische Energietechnik, einer Meeresgrundverankerung, einer Verbindungsstruktur-Anordnung, und betrifft ferner ein Verfahren zum Errichten einer Meeresinstallation.

Ein Offshore-Windpark umfasst eine Mehrzahl von Windturbinen, welche im Meer installiert und am Meeresgrund verankert sind. Die Windturbinen liefern typischerweise einen Energiestrom als Wechselspannung (AC). Um die elektrische Energie an Land zu transportieren, kann eine Hochspannungs-Gleichstromübertragung oder auch eine Hochspannungs-Wechselstromübertragung zur Anwendung kommen. Für eine Hochspannungs-Gleichstromübertragung kann eine sogenannte HVDC-Substation zur Anwendung kommen, in welcher die elektrische Leistung bzw. der elektrische Energiestrom von einer Mehrzahl von Windturbinen gesammelt wird und für die Übertragung auf die Landnetze auf eine andere Spannungsebene transformiert wird sowie von Wechselspannung auf Gleichstrom transformiert wird.

Herkömmlicherweise wird eine derartige HVDC-Substation von einer Gründung getragen, welche aus einer Vielzahl von Einzelelementen (z.B. Stahlrohren und Rohrknoten) besteht, die entsprechend der strukturellen Belastung dimensioniert und miteinander zu einem je nach Wassertiefe 2000 t bis über 5000 t schweren Einzelobjekt verschweißt werden. Dabei sind, bedingt durch die Größe und einer Baumethodik mit einem hohen Grad an manueller Fertigung, die Kosten pro verbauter Tonne Stahl, im Vergleich zu den in großen Stückzahlen gebauten Fundamenten für Windenergieanlagen, vergleichsweise höher. Ferner ist, bedingt durch die Größe und Masse der Gründung, zur Installation ein separates leistungsfähigeres Kranschiff nötig, als zur Installation der Windenergieanlagen im Windpark, was die Installation zusätzlich verteuert.

Um die Energie von den Windturbinen direkt zur HVDC-Plattform zu führen, müssen im Durchschnitt ca. 12 bis 17 AC-Seekabel auf die Umspannplattform gezogen werden. Um die Seekabel vor mechanischen Beschädigungen zu schützen, werden diese mit einem sehr starren Mantel versehen, aufgrund dessen die Kabel einen relativ großen Biegeradius von 3-5 m aufweisen. Um nicht innerhalb der Substation bei der Verlegung der Kabel mit diesem großen Biegeradius arbeiten zu müssen, werden die Seekabel herkömmlicherweise bei einer HVDC-Substation zuerst in einen Verbindungsraum (Cable jointing room) gezogen. Welcher in überwiegenden Fällen zwischen 500 und 700 qm² der unteren Deckfläche einer Substation benötigt. Damit wird die gesamte Substation notwendigerweise größer in der Ausdehnung und schwer im Gewicht sowie teuer in den Kosten. Alternativ wurde auch in Einzelfällen ein separates Kabeldeck unterhalb der konventionellen HVDC-Substation vorgesehen, auf welches die Seekabel gezogen werden und mit den Kabeln der HVDC-Substation verbunden.

Bekannte Säulen zum Tragen von Windkraftanlagen sind zum Beispiel in der WO 2010/103114 A1, der EP 2 597 227 A1 und der US 2014/0147272 A1 beschrieben.

Weitere Tragestrukturen sind beispielsweise aus der GB 2473058 A , der WO2015/019664 A1 und der KR 2015 0145978 A bekannt.

Dementsprechend ist es eine Aufgabe der vorliegenden Erfindung, Komponenten und Verfahren für die Etablierung einer Meeresinstallation bereitzustellen, wobei die Installation vereinfacht ist, kostengünstiger durchgeführt und raumsparender ausgeführt werden kann.

Die Aufgabe wird durch die Gegenstände der unabhängigen Ansprüche gelöst, welche auf eine Verbindungsstruktur zum Verbinden einer Meeresverankerung mit einem Aufbau für elektrische Energietechnik, auf eine Meeresinstallation sowie auf ein Verfahren zum Errichten einer Meeresinstallation gerichtet sind. Die abhängigen Ansprüche spezifizieren besondere Ausführungsformen der vorliegenden Erfindung.

Gemäß einer Ausführungsform der vorliegenden Erfindung ist bereitgestellt eine Verbindungsstruktur zum Verbinden einer Meeresgrundverankerung mit einem Aufbau für elektrische Energietechnik, aufweisend: eine horizontal umlaufende (z.B. ringförmige geschlossene) sich in vertikaler Richtung erstreckende (z.B. metallische) Wand, die einen Raumbereich begrenzt; einen ersten (z.B. oberen) Verbindungsabschnitt, der zum Verbinden mit dem Aufbau ausgebildet ist; einen zweiten (z.B. unteren) Verbindungsabschnitt, der zum Verbinden mit der Meeresgrundverankerung ausgebildet ist.

Nach einer vollständigen Installation ist die Verbindungsstruktur zwischen der Meeresverankerung (welche teilweise unterhalb der Meeresoberfläche angeordnet ist) und dem Aufbau (welcher vollständig oberhalb der Meeresoberfläche angeordnet ist) angeordnet. Die Verbindungsstruktur kann zumindest im Wesentlichen aus Metall, insbesondere Stahl gefertigt sein. Die Verbindungsstruktur kann eine Höhe von z.B. zwischen 2 m und 10 m und eine laterale Ausdehnung von jeweils z.B. zwischen 5 m und 20 m in zwei zueinander senkrechten lateralen Richtungen aufweisen.

Die Meeresgrundverankerung kann eine auf und/oder in dem Meeresgrund verankerte Struktur sein, welche von dem Meeresgrund bis oberhalb der Meeresoberfläche reicht. Die Meeresverankerung kann z.B. als ein Pfahl, z.B. eine im Wesentlichen zylindrische Röhre oder konisch sich nach oben hin verjüngende Röhre oder als ein Saugeimer ausgebildet sein. Eine Verbindung mit dem Meeresgrund kann z.B. durch ein Hineinrammen in den Meeresgrund eines Teils einer im Wesentlichen zylindrischen Röhre erreicht werden. In anderen Ausführungsformen wird der Druck der Wassersäule verwendet, um einen Saugeimer an dem Meeresgrund zu fixieren.

Der Aufbau für die elektrische Energietechnik kann elektrische und elektronische Komponenten zur Konvertierung bzw. Transformation von elektrischer Energie umfassen. Der Aufbau kann z.B. ein oder mehrere Transformatoren, ein oder mehrere Konverter (z.B. AC-DC-Konverter) und entsprechende Steuerungen dafür aufweisen. Der Aufbau kann einen Generator und weitere Komponenten wie Schaltanlagen umfassen.

Die sich in vertikaler Richtung erstreckende Wand kann z.B. aus Stahl gefertigt sein und kann ringförmig im Wesentlichen geschlossen sein, um somit eine Hülse zu bilden, deren Querschnittsform jedoch verschieden von einer Kreisform oder ovalen Form sein kann. Eine Querschnittsform der horizontal umlaufenden Wand kann z.B. im Wesentlichen rechteckig oder quadratisch sein, insbesondere mit abgerundeten Ecken. Insbesondere kann somit die Wand ebene und somit gerade Abschnitte aufweisen, welche sich z.B. in zwei zueinander senkrechten lateralen Richtungen sowie vertikal erstrecken können. Aufgrund der geraden Wandabschnitte kann z.B. ein Aufbau effektiv gestützt werden, wenn z.B. tragende Wände oder zumindest eine tragende Wand des Aufbaus oberhalb von geraden Wandabschnitten der horizontal umlaufenden Wand angeordnet sind (nach vollständiger Installation oder Etablierung einer Meeresinstallation).

Nach einer vollständigen Installation kann eine Ringebene der horizontal umlaufenden Wand z.B. in einer Horizontalen liegen. Dabei kann die horizontal umlaufende sich in vertikaler Richtung erstreckende Wand eine ringförmig geschlossene obere Kante und eine ringförmig geschlossene untere Kante aufweisen, die z.B. mit dem ersten bzw. zweiten Verbindungsabschnitt in Verbindung stehen bzw. diesen selbst bilden.

Der erste Verbindungsabschnitt wird auch als der obere Verbindungsabschnitt bezeichnet und dient der Verbindung der Verbindungsstruktur mit dem Aufbau. Der zweite Verbindungsabschnitt wird auch als der untere Verbindungsabschnitt bezeichnet, welcher zum Verbinden der Verbindungsstruktur mit der Meeresgrundverankerung dient. Das Verbinden sowohl der Meeresverankerung als auch des Aufbaus mit der Verbindungsstruktur kann unter Zuhilfenahme von Schrauben, unter Zuhilfenahme von Schweißen oder Vergussmörtel erfolgen.

Der erste Verbindungsabschnitt und/oder der zweite Verbindungsabschnitt können als ein Teil der horizontal umlaufenden Wand gebildet sein. Alternativ können der erste und/oder der zweite Verbindungsabschnitt durch weitere separate Komponenten gebildet sein, welche mit Teilen der horizontal umlaufenden Wand verbunden sind.

Der Raumbereich, welcher von der horizontal umlaufenden Wand begrenzt wird, ermöglicht vorteilhaft ein Zuführen bzw. elektrisches Verbinden von einem oder mehreren Seekabeln mit Kabeln des Aufbaus. Wenn der Aufbau mit der Verbindungsstruktur verbunden ist, kann der Raumbereich vollständig abgeschlossen sein, so dass Kabel oder Kabelisolation vor Sonneneinstrahlung, insbesondere UV-Strahlung geschützt sein kann. Der Raumbereich kann von Bedienpersonal betreten werden, um z.B. Verbindungen zwischen einem Seekabel und einem Kabel des Aufbaus zu etablieren.

Gemäß der vorliegenden Erfindung weist der erste Verbindungsabschnitt einen umfangsmäßig (insbesondere ringförmig) vollständig umlaufenden (insbesondere geschlossenen) Flansch an der Wand mit vertikal ausgerichteten Durchgangslöchern auf, durch die Schrauben zur Verbindung mit dem Aufbau geführt werden können. Damit ist eine einfache Verbindungsmöglichkeit mit dem Aufbau bereitgestellt. Neben oder alternativ einer Schraubverbindung kann eine Verbindung zwischen der ersten Verbindungsstruktur und dem Aufbau auch durch Schweißen, Einbringen von Vergussmörtel oder durch andere Verfahren erreicht werden.

Gemäß einer Ausführungsform der vorliegenden Erfindung weist die Verbindungsstruktur ferner einen Boden auf, der mit der Wand verbunden ist und den Raumbereich zumindest teilweise nach unten verschließt. Der Boden kann eben ausgeführt sein und bei vollständiger Installation im Wesentlichen horizontal ausgerichtet sein. Der Boden kann eine Öffnung zu einem Innenraum der Meeresgrundverankerung aufweisen, durch welche Öffnung z.B. ein Seekabel geführt werden kann. Insbesondere kann der Boden für jedes einer Mehrzahl von Seekabeln eine dementsprechend bemessene Öffnung aufweisen. Damit kann vorteilhaft ein Seekabel aus der Tiefe entweder innerhalb einer hohlen Meeresgrundverankerung oder außerhalb der Meeresgrundverankerung nach oben gezogen werden, um dann insbesondere innerhalb des Raumbereiches elektrisch mit Anschlüssen bzw. Kabeln des Aufbaus verbunden zu werden.

Gemäß einer Ausführungsform der vorliegenden Erfindung weist der zweite Verbindungsabschnitt einen Formübergang einer Querschnittsform des Raumbereiches/der Wand zu einer Querschnittsform eines oberen Endes der Meeresgrundverankerung auf. Somit kann sich die Querschnittsform entlang der vertikalen Richtung ändern. Der Formübergang kann insbesondere von im Wesentlichen quadratisch oder rechteckig auf kreisförmig verlaufen. Eine Meeresgrundverankerung, welche einen im Wesentlichen kreisförmigen Querschnitt aufweist, kann eine relativ hohe Stabilität aufweisen und kann somit eine stabile Verankerung bereitstellen. Andererseits kann eine rechteckige bzw. quadratische Querschnittsform der horizontal umlaufenden Wand vorteilhaft, eine Last des Aufbaus aufnehmen, wenn der Aufbau typischerweise gerade verlaufende tragende Wände aufweist. Aufgrund des Formübergangs kann somit eine stabile Unterstützung bzw. Gründung des Aufbaus gewährleistet werden.

Gemäß einer Ausführungsform der vorliegenden Erfindung weist die Verbindungsstruktur ferner zumindest einen Kabelverbinder und/oder Kabelstecker innerhalb des Raumbereichs auf, um ein Seekabel mit einem Kabel des Aufbaus elektrisch zu verbinden.

Der Raumbereich kann ausreichend groß bemessen sein, um ein Seekabel oder ein Kabel des Aufbaus innerhalb des Raumbereiches im gebogenen Zustand von z.B. 180° zu beherbergen. Ein Seekabel oder ein Kabel des Aufbaus kann somit innerhalb des Raumbereichs derart ausgerichtet und gebogen werden, um mit den gewünschten Kabelverbindern und/oder Kabelsteckern elektrisch verbunden zu werden. Somit kann der Aufbau in seiner Höhe oder in seiner gesamten Konstruktion in der Größe vermindert werden, da ein Zwischendeckbereich oder ein Verbindungsbereich zum Verbinden von Kabeln innerhalb des Aufbaus vermieden werden kann.

Gemäß der Erfindung weist die Verbindungsstruktur ferner zumindest eine, insbesondere selbst ansaugende Pumpe innerhalb des Raumbereichs auf, um Meereswasser als Kühlmittel dem Aufbau zuzuführen und/oder abzuführen. Die Pumpe kann z.B. als eine Kreiselpumpe ausgeführt sein. Herkömmlicherweise wurden in herkömmlichen Gründungen Kühlwasserpumpen unterhalb der Meeresoberfläche angeordnet. Dadurch waren sie sehr schwer zugänglich und eine Wartung war sehr zeit- und kostenaufwendig. Gemäß der Ausführungsform in dem Raumbereich angeordnete Pumpen sind hingegen von Bedienpersonal leicht zugänglich und somit leicht wartbar.

Gemäß einer Ausführungsform der vorliegenden Erfindung weist die Verbindungsstruktur ferner eine an die Wand angebrachte und außerhalb des Raumbereichs angeordnete horizontale Fläche (z.B. in Form eines Balkons) auf und eine insbesondere reversibel verschließbare Öffnung (z.B. als Tür ausgebildet) in der Wand, um einen Zugang von dem Raumbereich zu der horizontalen Fläche zu erlauben. Auf der horizontalen Fläche kann z.B. zeitweise eine Kabelwinde aufgestellt bzw. installiert werden, um ein Heraufziehen von einem Seekabel durch ein J-Tube entweder entlang einer Außenfläche der Meeresgrundverankerung oder innerhalb einer hohlen Meeresgrundverankerung zu ermöglichen. Die horizontale Fläche kann durch ein Geländer in einem Außenbereich begrenzt werden. Somit kann ein geeigneter Platz zur Installation einer Seilwinde bereitgestellt werden, so dass ein entsprechender Platz auf dem Aufbau (z.B. für Energietechnik) eingespart werden kann.

Gemäß der vorliegenden Erfindung ist eine Verbindungsstruktur-Anordnung bereitgestellt, welche mindestens zwei Verbindungsstrukturen gemäß einer der vorangehend beschriebenen Ausführungsformen aufweist, welche sich derart verbinden lassen, dass jeweilige Flansche (oder allgemein obere Kanten des oberen Verbindungsabschnitts) der ersten Verbindungsstrukturen im Wesentlichen in einer horizontalen Ebene liegen. Die Verbindungsstruktur-Anordnung kann dann vorteilhaft zunächst auf mehrere Meeresgrundverankerungen aufgesetzt und verbunden werden, um danach den Aufbau darauf aufzusetzen, um Installationstoleranzen der Meeresgrundverankerung auszugleichen und sicherzustellen, dass etwaige vertikale Unterschiede der oberen Enden der Meeresgrundverankerungen durch die einheitlich vertikal ausgerichteten Verbindungsstrukturen ausgeglichen wird.

Bei der Installation eines Aufbaus kann die horizontale Ebene der zwei verbundenen Verbindungsstrukturen in eine gewünschte Höhe (über dem Meeresspiegel) gebracht werden und die in dieser Höhe befindlichen Verbindungsstrukturen können mit den jeweiligen Meeresgrundverankerungen verbunden werden. Dadurch kann gewährleistet werden, dass der Aufbau einen vorbestimmten gewünschten Abstand von der Meeresoberfläche hat, nachdem er über die oberen Verbindungsabschnitte der Verbindungsstrukturen mit den Verbindungsstrukturen verbunden worden ist.

Gemäß einer Ausführungsform der vorliegenden Erfindung ist bereitgestellt eine Meeresinstallation, aufweisend: einen Aufbau für Energietechnik; eine Meeresgrundverankerung; und mindestens eine Verbindungsstruktur gemäß einer der vorangehenden Ausführungsformen und/oder oder mindestens eine Verbindungsstruktur-Anordnung gemäß der vorangehenden Ausführungsform, wobei die zumindest eine Verbindungsstruktur über den ersten Verbindungsabschnitt mit dem Aufbau verbunden ist und über den zweiten Verbindungsabschnitt mit der Meeresgrundverankerung (z.B. an einem oberen Ende davon) verbunden ist.

In einer Ausführungsform der vorliegenden Erfindung liegt die Verbindungsstruktur im Wesentlichen unterhalb eines 100-Jahreswellenpegels und oberhalb eines niedrigsten Tiedenhubpegels. Der 100-Jahreswellenpegel kann als derjenige Pegel aufgefasst werden, welcher mit einer hohen Wahrscheinlichkeit nur einmal in 100 Jahren die Höhe markiert, die von der höchsten Wasserwelle erreicht werden kann. Der niedrigste Tidenhubpegel kann als derjenige Pegel der Meeresoberfläche sein, welcher nicht unterschritten wird. Der Aufbau kann vollständig oberhalb des 100-Jahreswellenpegels liegen, um somit den Aufbau auch in dem unwahrscheinlichen Fall zu schützen, dass eine 100-Jahreswelle auftritt. Ein normaler (oder durchschnittlicher) Meerespegel kann zwischen dem 100-Jahreswellenpegel und dem niedrigsten Tidenhubpegel liegen.

Gemäß einer Ausführungsform der vorliegenden Erfindung umfasst die Meeresverankerung einen hohlen Rammpfahl (pile), der in einen Meeresgrund rammbar bzw. gerammt ist und insbesondere eine kleinere Querschnittgröße als der Raumbereich hat; oder (in einer Ausführungsform) einen Saugeimer (suction bucket), mit dem Meeresboden verankerbar bzw. verankert ist und insbesondere eine größere Querschnittgröße als der Raumbereich hat.

Damit können herkömmliche Meeresgrundverankerungen unterstützt werden. Der Rammpfahl kann z.B. zwischen 30 m und 70 m in den Meeresgrund eingerammt werden bzw. sein. Der Saugeimer kann eine wesentlich größere Querschnittsfläche als der Raumbereich aufweisen, z.B. eine 2-10 mal so große Querschnittsgröße aufweisen. Der Rammpfahl kann z.B. eine zwischen 0,2 und 0,8 mal so große Querschnittsgröße aufweisen wie der Raumbereich.

Gemäß der vorliegenden Erfindung umfasst der Aufbau eine HVDC-Station, umfassend eine AC-DC-Konverter Anlage, um eine DC-Energieübertragung von, insbesondere von Windturbinen gelieferter, AC-Energie an eine Landstation zu ermöglichen.

Gemäß einer Ausführungsform der vorliegenden Erfindung ist zumindest eine tragende Wand des Aufbaus vertikal im Wesentlichen in einer Linie mit einem Abschnitt der vertikalen Wand der Verbindungsstruktur angeordnet. Damit kann die Last des Aufbaus vorteilhaft auf die umlaufende Wand der Verbindungsstruktur übertragen werden und somit in zuverlässiger Weise gestützt sein.

Gemäß einer Ausführungsform der vorliegenden Erfindung weist die Meeresinstallation ferner eine Seekühlanlage mit Zuleitungsrohren und/oder Ableitungsrohren auf, die zumindest teilweise innerhalb der Meeresgrundverankerung und/oder des Raumbereiches der Verbindungsstruktur angeordnet sind. Somit kann innerhalb des Aufbaus auch Platz gespart werden, welcher herkömmlicherweise für eine Seekühlanlage bereitgestellt sein muss.

Es sollte verstanden werden, dass Merkmale, welche individuell oder in irgendeiner Kombination im Zusammenhang mit einer Verbindungsstruktur, mit einer Verbindungsstruktur-Anordnung oder einer Meeresinstallation auch, individuell oder in jeder Kombination, für ein Verfahren zum Errichten einer Meeresinstallation angewendet werden können und umgekehrt gemäß Ausführungsformen der vorliegenden Erfindung.

Gemäß einer Ausführungsform der vorliegenden Erfindung ist bereitgestellt ein Verfahren zum Errichten einer Meeresinstallation, aufweisend: Verankern einer Meeresgrundverankerung im Meeresgrund; Verbinden mindestens einer Verbindungsstruktur mit der Meeresgrundverankerung über einen zweiten Verbindungsabschnitt der Verbindungsstruktur, insbesondere in vordefinierter vertikaler Position; Verbinden des Aufbaus über einen ersten Verbindungsabschnitt der Verbindungsstruktur mit der Verbindungsstruktur, wobei die Verbindungsstruktur zwischen dem ersten und dem zweiten Verbindungsabschnitt eine horizontal umlaufende (ringförmige geschlossene) sich in vertikaler Richtung erstreckende (metallische) Wand aufweist, die einen Raumbereich begrenzt.

Das Verfahren kann ferner aufweisen, innerhalb des Raumbereiches, elektrisches Verbinden eines Seekabels mit einem Kabel des Aufbaus. Ferner kann das Verfahren aufweisen ein Heraufziehen eines Endes eines Seekabels in den Raumbereich.

Ausführungsformen der vorliegenden Erfindung werden nun mit Bezug auf die beiliegenden Zeichnungen erläutert. Die Erfindung ist nicht auf die illustrierten oder beschriebenen Ausführungsformen beschränkt.

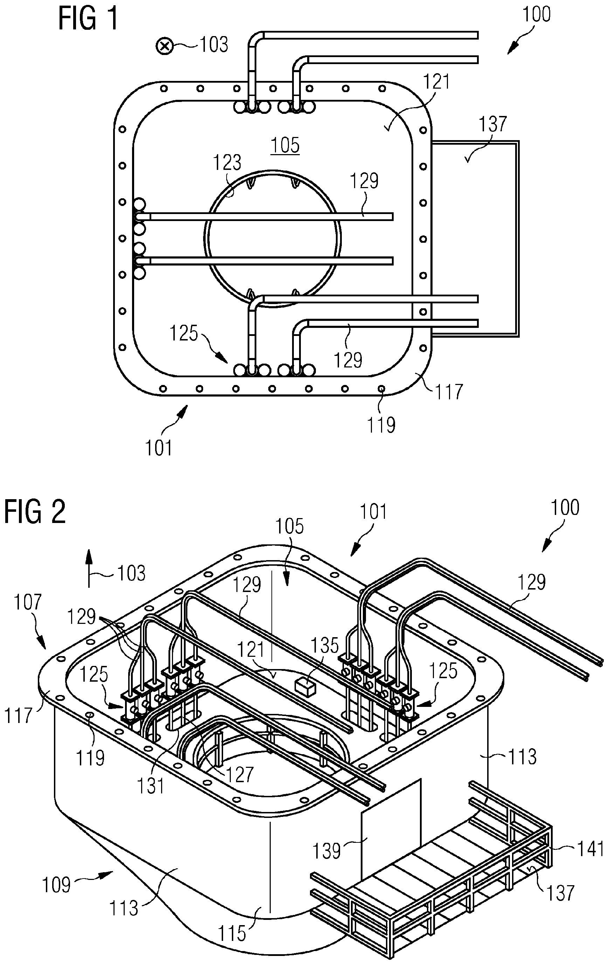

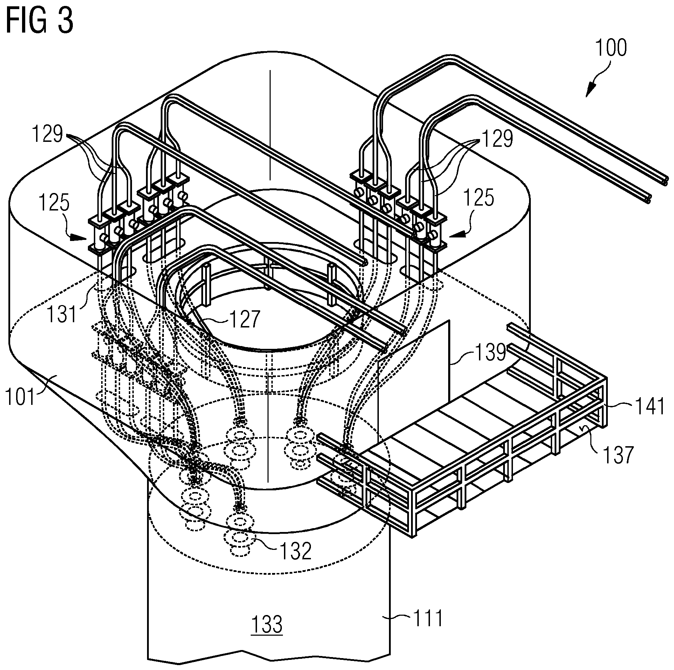

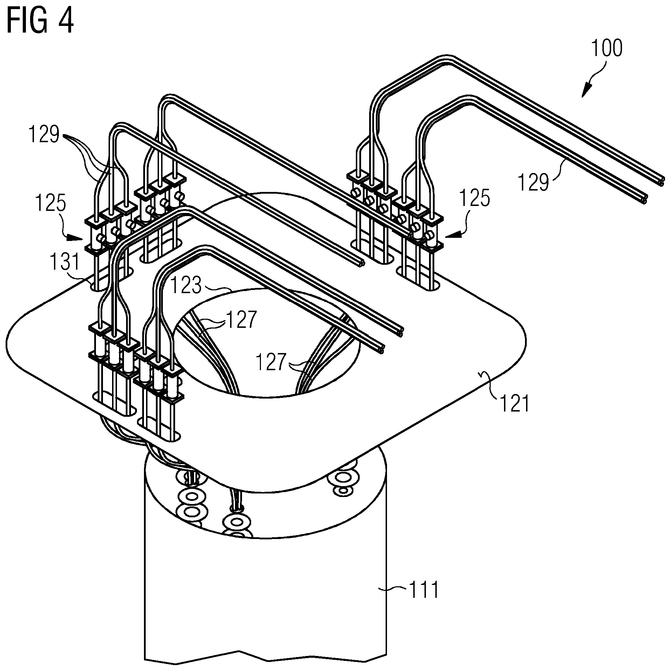

Fig. 1 illustriert schematisch in einer Draufsicht entlang einer vertikalen Richtung 103 eine Verbindungsstruktur 100 gemäß einer Ausführungsform der vorliegenden Erfindung, wobei die Verbindungsstruktur zum Verbinden einer Meeresgrundverankerung mit einem Aufbau für elektrische Energietechnik ausgelegt ist. Die Verbindungsstruktur 100, welche in Fig. 2 in einer schematischen perspektivischen Darstellung, in Fig. 3 in einer schematischen perspektivischen transparenten Darstellungsweise und welche in Fig. 4 in einer perspektivischen, teilweise weggebrochenen Darstellung illustriert ist, umfasst eine horizontal umlaufende sich in der vertikalen Richtung 103 erstreckende metallische Wand 101, die einen Raumbereich 105 begrenzt. Ferner weist die Verbindungsstruktur 100 einen ersten, oberen Verbindungsabschnitt 107 auf, der zum Verbinden mit einem Aufbau für Energietechnik ausgebildet ist. Ferner weist die Verbindungsstruktur 100 einen zweiten, unteren Verbindungsabschnitt 109 auf, der zum Verbinden mit einer Meeresgrundverankerung ausgebildet ist, welche in Fig. 4 teilweise dargestellt ist und mit Bezugszeichen 111 bezeichnet ist.

Wie aus der Draufsicht der Fig. 1 ersichtlich ist, ist die Form der umlaufenden Wand 101 im Wesentlichen quadratisch mit ebenen Abschnitten 113 und mit abgerundeten Kanten bzw. abgerundeten Ecken 115. Der erste Verbindungsbereich 107 weist einen umfangsmäßig vollständig umlaufenden Flansch 117 auf, welcher Durchgangslöcher 119 umfasst, durch die Schrauben zur Verbindung mit einem Aufbau geführt werden können. Somit bildet die durch den Flansch 117 gebildete Fläche eine Ebene, die die Position eines unteren Abschnitts eines Aufbaus definiert.

Die Verbindungsstruktur 100 weist ferner einen Boden 121 auf, welcher mit der Wand 101 verbunden ist, und den Raumbereich 105 nach (vertikal) unten verschließt, zumindest teilweise. Der Boden weist eine zentrale Öffnung 123 auf, durch die z.B. ein Seekabel von unterhalb der Verbindungsstruktur 100 in den Raumbereich 105 hereingezogen werden kann. Innerhalb des Raumbereichs 105 sind (z.B. an der Wand 101) mehrere Kabelverbinder und/oder Kabelstecker 125 angeordnet und montiert, um ein Seekabel 127 mit einem Kabel 129 des Aufbaus elektrisch zu verbinden. In der illustrierten Ausführungsform sind die Seekabel 127 durch separate Kabelöffnungen 131 in dem Boden 121 geführt. Die Seekabel 127 können ferner durch weitere Kabelöffnungen 132 in einem oberen Bereich der Meeresgrundverankerungen 111 in einen Innenraum 133 der Meeresgrundverankerung 111 geführt sein, wie insbesondere aus Fign. 3 und 4 ersichtlich ist.

In der illustrierten Ausführungsform der Fign. 1 bis 4 ist innerhalb des Raumbereichs 105 ferner eine Kreiselpumpe 135 angeordnet, um Meereswasser als Kühlmittel dem Aufbau zuzuführen und/oder abzuführen. Dazu sind teilweise Zuführungen und Abführungen für das Kühlmittel innerhalb des Raumbereichs vorgesehen, welche zur Vereinfachung in Fign. 1 bis 4 nicht dargestellt sind.

Die Verbindungsstruktur weist ferner eine an die Wand 101 angebrachte und außerhalb des Raumbereichs 105 angeordnet horizontale Fläche 137 auf und eine insbesondere reversibel verschließbare Öffnung 139 in der Wand 101, um einen Zugang von dem Raumbereich zu der horizontalen Fläche 137 zu ermöglichen. Ein Geländer 141 begrenzt in einem von der Wand 101 nicht begrenzten Bereich die Fläche 137. Die Öffnung 139 kann durch eine nicht illustrierte Tür reversibel verschlossen werden. Auf die Fläche 137 kann Zusatzausstattung, wie z.B. eine Seilwinde, angeordnet werden, um ein Seekabel von unten heraufzuziehen.

Mindestens zwei der in Fign. 1 bis 4 illustrierten Verbindungsstrukturen können zu einer Verbindungsstruktur-Anordnung gemäß einer Ausführungsform der vorliegenden Erfindung derart verbunden werden, dass jeweilige Flansche 117 der jeweiligen Verbindungsstrukturen im Wesentlichen in einer horizontalen Ebene liegen. Diese horizontale Ebene wird in eine gewünschte vorbestimmte Höhe über dem Meeresspiegel gebracht werden und eine Unterseite des auf die Verbindungsstruktur aufzusetzenden Aufbaus definieren.

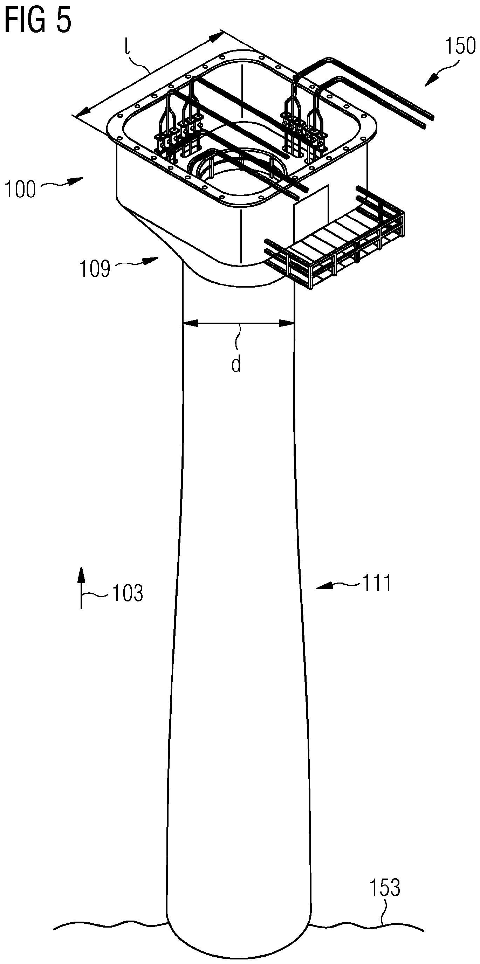

Fig. 5 illustriert eine Gründung für einen Aufbau für elektrische Energietechnik gemäß einer Ausführungsform der vorliegenden Erfindung. Die Gründung 150, welche in Fig. 5 in einer perspektivischen Darstellung illustriert ist, umfasst eine Verbindungsstruktur 100 gemäß einer Ausführungsform der vorliegenden Erfindung (wie sie z.B. in Fign. 1 bis 4 illustriert ist) sowie eine Meeresgrundverankerung 111, welche in einem Meeresgrund 153 verankert ist. Die Meeresgrundverankerung 111 ist in der in Fig. 5 illustrierten Ausführungsform als ein hohler Rammpfahl ausgebildet, der in den Meeresgrund 153 gerammt ist und eine kreisförmige Querschnittsform aufweist, deren Durchmesser d kleiner ist als eine Seitenlänge 1 des Querschnittes des Raumbereichs 105 bzw. der umlaufenden Wand 101.

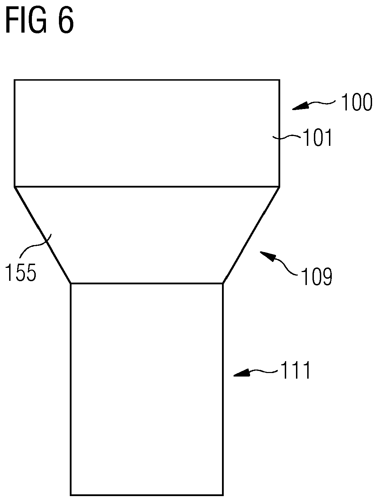

Die Meeresgrundverankerung 101 ist an einem oberen Ende mit dem unteren Verbindungsabschnitt 109 der Verbindungsstruktur 100 verbunden, z.B. durch Vergussmörtel, Schweißen, Schrauben, etc. Die Verbindungsstruktur 100 weist einen Formübergang 155 (siehe Fig. 6) einer Querschnittsform des Raumbereiches 105 bzw. der Wand 101 zu einer Querschnittsform eines oberen Endes der Meeresgrundverankerung 111 auf. Der Formübergang 155 verläuft dabei im Wesentlichen von quadratisch auf kreisförmig, wie aus Fign. 5 und 6 ersichtlich ist.

Fig. 5 illustriert in einer schematischen perspektivischen Darstellung eine Gründung 150 gemäß einer Ausführungsform der vorliegenden Erfindung, welche eine einzige Verbindungsstruktur 100 gemäß einer Ausführungsform der vorliegenden Erfindung aufweist, sowie eine einzige Meeresgrundverankerung 111. Gemäß anderen Ausführungsformen umfasst eine Gründung vier Meeresgrundverankerungen jeweils mit damit verbundenen Verbindungsstrukturen 100.

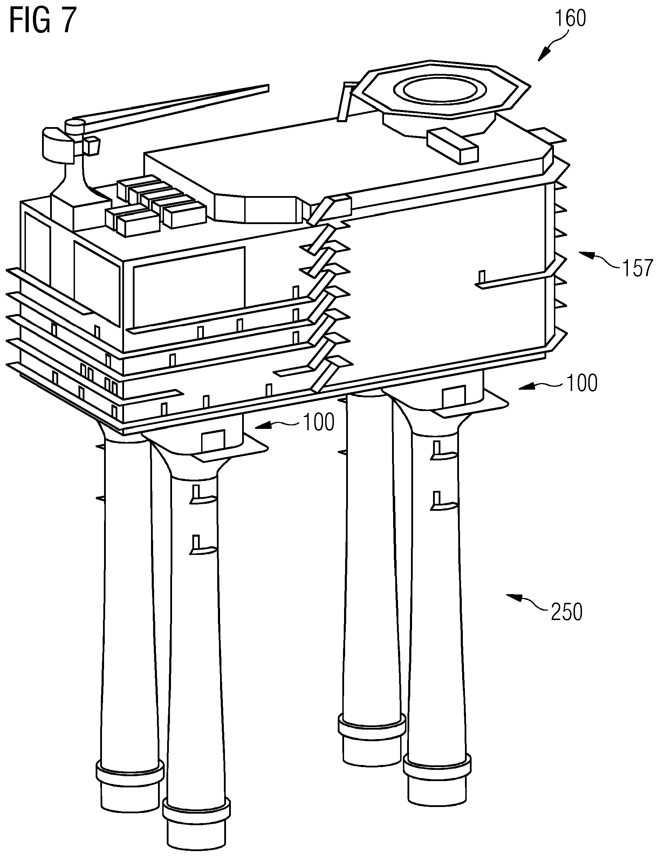

Fig. 7 illustriert in schematischer perspektivischer Darstellung eine Meeresinstallation 160 gemäß einer Ausführungsform der vorliegenden Erfindung, welche einen Aufbau 157 für Energietechnik aufweist sowie eine Gründung 250, welche z.B. durch vier Gründungen 150 wie sie in Fig. 5 illustriert sind, gebildet ist. Somit ist der Aufbau 157 auf den Flanschen 117 (siehe Fig. 2) der jeweiligen Verbindungsstrukturen 100 angebracht.

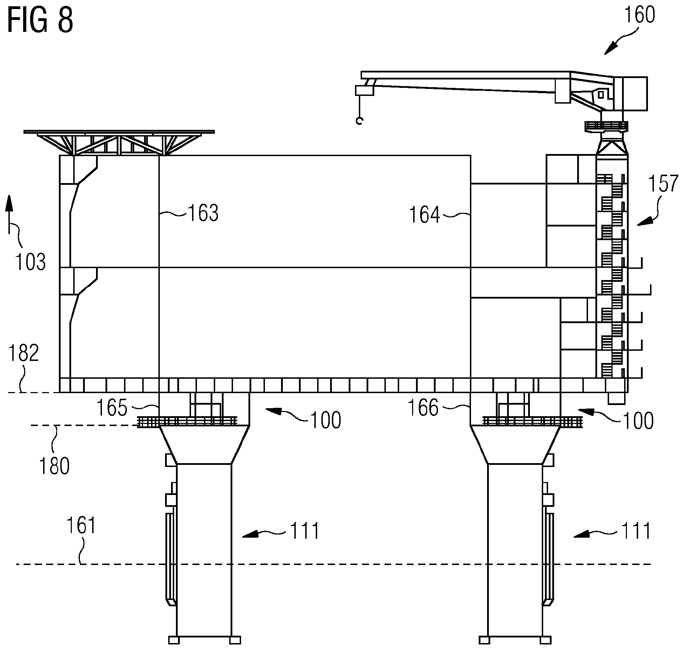

Fig. 8 illustriert in einer schematischen Seitenansicht bzw. Seitenschnittansicht die Installation 160, welche in Fig. 7 in einer perspektivischen Darstellung illustriert ist. Der Aufbau 157 umfasst dabei eine tragende Wand 163 (bzw. 164), welche vertikal (d.h. in vertikaler Richtung 103) im Wesentlichen in einer Linie mit einem Abschnitt 165 (bzw. 166) der vertikalen Wand 101 der Verbindungsstruktur 100 angeordnet ist. Damit ist eine verbesserte Abstützung des Aufbaus 157 erreicht. Ein Kabeldeckniveau 180 liegt unterhalb eines niedrigsten Niveaus 182 des Aufbaus 157.

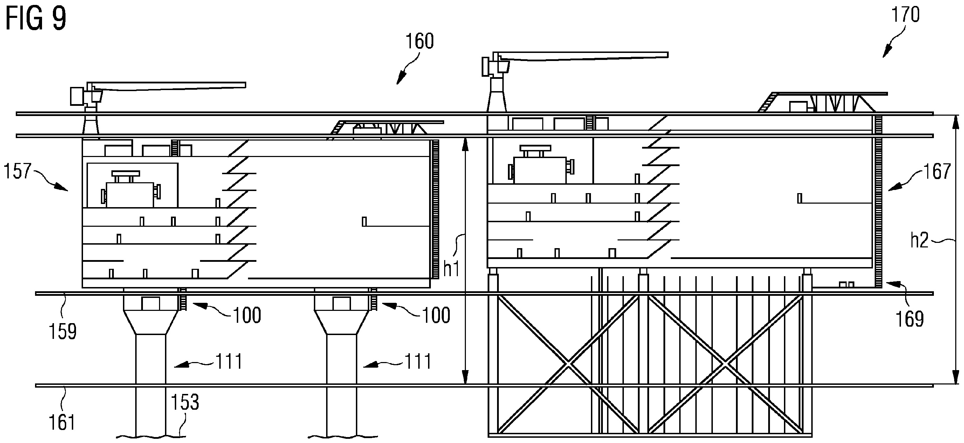

Fig. 9 zeigt in einer schematischen Seitenansicht eine Meeresinstallation 160 im Vergleich zu einer konventionellen Meeresinstallation 170. Die Linie 161 illustriert einen niedrigsten Tidenhubpegel und eine Linie 159 illustriert einen 100-Jahreswellenpegel. Wie aus Fig. 9 ersichtlich ist, ist die Verbindungsstruktur 100 im Wesentlichen unterhalb des 100-Jahreswellenpegels 159 angeordnet, jedoch wesentlich oberhalb des niedrigsten Tidenhubpegels 161.

Die konventionelle Meeresinstallation umfasst in dem konventionellen Aufbau 167 ein unterstes Deck 169, welches zum Verbinden und Hochziehen von Kabeln verwendet wird.

Das Hochziehen und Verbinden von Kabeln wird gemäß Ausführungsform der vorliegenden Erfindung innerhalb des Raumbereichs der Verbindungsstruktur 100 durchgeführt, kann somit das Verbindungsdeck 169 des Aufbaus eingespart werden, wodurch eine Gesamthöhe h1 der Meeresinstallation 160 gemäß einer Ausführungsform der vorliegenden Erfindung erreicht werden kann, welche Gesamthöhe h1 geringer ist (z.B. um 3 bis 6 m) als eine Gesamthöhe h2 der konventionellen Meeresinstallation 170. Die Höhen h1, h2 sind dabei jeweils in Bezug auf den niedrigsten Tidenhubpegel 161 gemessen.

Die Gründung, wie sie z.B. in Fig. 5 illustriert ist oder in Fig. 7 unterhalb des Aufbaus illustriert ist, kann für verschiedene Bestandteile eines Offshore-Windparks verwendet werden. Gemäß Ausführungsformen der vorliegenden Erfindung wird ein Seekabel oder Kabel des Aufbaus im konischen Teil (siehe z.B. den Übergangsbereich 155 in Fig. 6) der Verbindungsstruktur 100 an den Wänden entlang geführt, um ausreichend viel Platz für das Verbinden innerhalb des Raumbereichs der Verbindungsstruktur 100 zu gewährleisten.

Diese Optimierung kann zu einer Reduzierung des Gewichts und des Volumens des Aufbaus führen, da das Kabeldeck (z.B. Deck 169 des konventionellen Aufbaus 167 in Fig. 9) entfallen kann. Ein weiterer positiver Aspekt ist, dass der Kabelzug jederzeit wetterunabhängig innerhalb des Raumbereichs der Verbindungsstruktur befindlich ist, ohne die Notwendigkeit einer temporären Einhausung, was wiederum Zeit und Kosten einsparen kann.

Drei der in Fig. 7 dargestellten Gründungspfähle können dabei als Kabelführung für bis zu 16 AC-Kabel (33kV, 66kV) und zwei DC-Kabel dienen. Der vierte Gründungspfahl kann spezifisch ausgeführt sein, um die Kühlwasserpumpen eines HVDC-Systems aufzunehmen. Zum Beispiel kann ein offenes Seekühlwasser-System umgesetzt werden. Ein Einsatz von selbstansaugenden Kreiselpumpen (z.B. Pumpe 135, welche in Fig. 2 illustriert ist) oberhalb der Wasserlinie innerhalb des Raumbereichs der Verbindungsstruktur anstelle von bisher für die HVDC-Plattform eingesetzten Tauchpumpen, kann die Zugänglichkeit und kann somit Wartungsaufwand vereinfachen und mögliche Reparaturen verkürzen. Konventionell mussten die Tauchpumpen aus dem Wasser gezogen und dabei zeitintensiv in mehrere Teilstücke zerlegt werden, um an den eigentlichen Pumpenkopf am Einlass des Steigrohres zu gelangen.

Die Verbindungsstruktur 100 kann auch als eine Aufweitung der zylindrischen Struktur auf eine quadratische Struktur angesehen werden. Diese Aufweitung kann mehrere Vorteile mit sich bringen: zum einen kann der Kraftfluss und die Krafteinleitung von dem Aufbau in die Verbindungsstruktur optimiert werden. Dies kann zu einer verringerten Durchbiegung und zu einer Materialersparnis im Bereich des Doppelbodens des Aufbaus führen. Zum anderen können Kabelzug und Kabelverbindungen in einem geschlossenen Raum (dem Raumbereich 105) vollzogen werden und sind somit unabhängig von äußeren Wettereinflüssen.

Ein zusätzliches Kabeldeck für den Aufbau kann somit überflüssig werden. Dies kann Volumen innerhalb bzw. unterhalb des Aufbaus einsparen. Zusätzlich kann der Raumbereich als ein Kabelverbindungsraum verwendet werden und kann im Bereich der Einflusszone einer Jahrhundertwelle liegen. Dies kann zu einer möglichen Reduzierung der Höhe der Struktur führen. Die Abmessungen der Aufweitung der Verbindungsstruktur und der obere Flansch können trotz Installationstoleranzen einen optimalen Kraftfluss in die Quer- und Längswände des Doppelbodens des Aufbaus ermöglichen. Die Abmessungen der Verbindungsstruktur können so gewählt werden, dass die (tragenden) Wände des Aufbaus eine Verlängerung der Hauptwände oder der tragenden Wände des Aufbaus darstellen. Um Wärmebeeinflussung durch eine Schweißverbindung zu vermeiden und daraus resultierende notwendige Offshore-Beschichtungsarbeiten nach der Installation des Aufbaus zu umgehen, sollte in einer bevorzugten Ausführung die Verbindung zwischen der Verbindungsstruktur und dem Aufbau als eine Schraubverbindung über einen innen- bzw. außenliegenden Flansch ausgeführt sein. Alternativ kann eine formschlüssige Verbindung mittels Vergussmörtel oder gleichwertig ausgeführt werden.

Die Kombination von vier Gründungspfählen (wie z.B. in Fig. 7 illustriert) kann als eine Gründung für einen Aufbau von ca. 10000 Tonnen verwendet werden. Dabei können bis zu ca. 16 AC-Kabel plus zwei DC-Kabel im Inneren von drei der vier Gründungspfähle geführt werden. Der vierte Gründungspfahl kann ausreichend Platz für die Unterbringung der Rohre und der Pumpen für den Kühlwasserkreislauf bieten. Der obere Teil der Verbindungsstrukturen kann dabei bevorzugt so ausgebildet sein, dass es der Positionierung direkt benachbarter Verbindungsstrukturen auf den Gründungspfählen vor dem Vergroutungsvorgang dient.

Gemäß Ausführungsformen der vorliegenden Erfindung kann das von den Clustern des Windparks kommende Kabel innerhalb der Gründungspfähle über Umlenkrollen vertikal bis unter die Decke der Übergangsstruktur gezogen werden. Die Zugkraft kann dabei über eine außerhalb des Innenbereichs liegende, temporär errichtete Seilwinde über Umlenkrollen auf das Kabel ausgeübt werden. Ist das Kabel vollständig hochgezogen, kann der Cable-Hang-Off direkt unterhalb der Verbindungsstruktur, im parallelen Teil des Gründungspfahles auf einem Zwischendeck vorgenommen werden. Dabei wird die äußere Ummantelung der Kabel entfernt und die enthaltene Stahlarmierung mittels eines Flansches fixiert um eine Zugentlastung der Seekabel herzustellen. Um das Kabel wie beschrieben ziehen zu können, wird im Deck der Verbindungsstruktur eine kreisrunde Öffnung (z.B. 123 dargestellt in Fig. 1) vorgesehen. Ist der Cable-Hang-Off vollzogen, werden die Kabel wieder herunter gelassen, auf dem Zwischendeck (Hang-Off-Deck) im Außendurchmesser des Decks geführt und die komplette äußere Isolierung entfernt. Von dort aus werden die Einzeladern der Kabel an der konischen Wand der Verbindungsstruktur entlang geführt und senkrecht durch Öffnungen des Kabeldecks in der Übergangs- bzw. Verbindungsstruktur geführt. Dort können die Kabel mit den Plattforminternen verbunden werden und weiter durch die Plattform geführt werden.

Rohre und Pumpen eines Kühlwasserkreislaufes können innerhalb eines Gründungspfahles installiert werden. Bei einer Installation über dem niedrigsten Tidenhubpegel könnten die bislang verwendeten Saugpumpen dabei durch Kreiselpumpen ersetzt werden. Die über dem Wasserspiegel angeordneten Pumpen können daher leicht durch Zugang im Raumbereich gewartet werden.

Durch die Kabelführung innerhalb eines Gründungspfahles kann, nach Stand der Technik bis auf die zwei Exportkabel, auf eine stählerne Kabelführung in Form eines J-Tube verzichtet werden, und. eine flexible Kabeldurchführung mitsamt flexiblem Kabelschutz verwendet werden.

In einer Ausführung kann anstatt eines Rammpfahls 111 auch eine Gründungsstruktur mit ein oder mehreren, z.B. drei Saugeimer verwendet werden. Hierbei können sich weitere Vorteile ergeben, wie z.B. Vermeidung des Rammvorganges bei der Installation, keine Unterwasser-Grouting-Operation Offshore, Verringerung von Kranschiff-Hebekapazität im Vergleich zu einer Jacket Installation oder sogar Verzicht von Kranschiff Operationen zur Gündungsinstallation, Offshore durch selbstschwimmenden Transport. Ein weiterer Vorteil dieser Ausführung ist, dass das komplette System mit allen Anbauteilen versehen werden kann, ohne dass die Bauteile den hohen Beschleunigungskräften und Ermüdung während des Rammvorganges ausgesetzt sind. Hierbei kann die Verbindungsstruktur nach unten entsprechend der Wassertiefe und dem Aufstellort verlängert werden und am unteren Ende mit den Saugeimern (suction Cans) als eine komplette Einheit als Gründungsstruktur ausgeschifft werden.

## Patentansprüche

1. Meeresinstallation (160), aufweisend:
einen Aufbau (157) für Energietechnik;
eine Gründung (150) aufweisend:
mindestens eine Verbindungsstruktur-Anordnung aufweisend mindestens zwei Verbindungsstrukturen, wobei jede Verbindungsstruktur aufweist:
eine horizontal umlaufende sich in vertikaler Richtung erstreckende Wand (101), die einen Raumbereich (105) begrenzt;
einen ersten Verbindungsabschnitt (107), der zum Verbinden mit dem Aufbau (157) ausgebildet ist;
einen zweiten Verbindungsabschnitt (109), der zum Verbinden mit der Meeresgrundverankerung (111) ausgebildet ist,
wobei der erste Verbindungsabschnitt (107) einen umfangsmäßig vollständig umlaufenden Flansch (117) an der Wand (101) mit Durchgangslöchern (119) aufweist, durch die Schrauben zur Verbindung mit dem Aufbau (157) geführt werden können
wobei zumindest eine Pumpe (135) innerhalb des Raumbereichs (105) vorgesehen ist, um Meereswasser als Kühlmittel dem Aufbau zuzuführen und/oder abzuführen; wobei die mindestens zwei Verbindungsstrukturen derart verbunden sind, dass die jeweiligen Flansche (117) der ersten Verbindungsabschnitte im Wesentlichen in einer horizontalen Ebene liegen,
wobei die Gründung ferner aufweist:
mindestens eine Meeresgrundverankerung (111), wobei eine Anzahl der Verbindungsstrukturen einer Anzahl der Meeresgrundverankerungen gleicht, wobei die Meeresgrundverankerung jeweils mit der Verbindungsstruktur über den zweiten Verbindungsabschnitt verbunden ist, und wobei die zumindest eine Verbindungsstruktur über den ersten Verbindungsabschnitt mit dem Aufbau verbunden ist,
wobei der Aufbau umfasst:
eine HVDC-Substation, umfassend ein AC-DC Konverter-Module, um eine DC-Energieübertragung von, insbesondere von Windturbinen gelieferte, AC-Energie an eine Landstation zu ermöglichen.

2. Meeresinstallation gemäß dem vorangehenden Anspruch, wobei die Verbindungsstruktur (100) im Wesentlichen unterhalb eines 100-Jahreswellenpegels (159) liegt und oberhalb eines niedrigsten Tidenhubpegels (161) liegt.

3. Meeresinstallation gemäß einem der vorangehenden Ansprüche, wobei die Meeresgrundverankerung umfasst:
einen hohlen Rammpfahl (111), der in einen Meeresgrund (153) rammbar bzw. gerammt ist und insbesondere eine kleinere Querschnittgröße als der Raumbereich hat; und/oder
einen Saugeimer, der über Druckdifferenz mit dem Meeresboden verankerbar bzw. verankert ist und insbesondere eine größere Querschnittgröße als der Raumbereich hat.

4. Meeresinstallation gemäß einem der vorangehenden Ansprüche 1 bis 3, wobei zumindest eine tragende Wand (163) des Aufbaus (157) vertikal im Wesentlichen in einer Linie mit einem Abschnitt (165) der vertikalen Wand (101) der Verbindungsstruktur (100) angeordnet ist.

5. Meeresinstallation gemäß einem der vorangehenden Ansprüche 1 bis 4, ferner aufweisend:
eine Seekühlanlage mit Zuleitungsrohren und/oder Ableitungsrohren, die zumindest teilweise innerhalb der Meeresgrundverankerung und/oder des Raumbereiches der Verbindungsstruktur angeordnet sind.

6. Verfahren zum Errichten einer Meeresinstallation (160) nach Anspruch 1, aufweisend:
Verankern einer Meeresgrundverankerung (111) im Meeresgrund (153);
Verbinden mindestens einer Verbindungsstruktur (100) mit der Meeresgrundverankerung (111) über einen zweiten Verbindungsabschnitt (109) der Verbindungsstruktur, insbesondere in vordefinierter vertikaler Position;
Verbinden des Aufbaus (157) über einen ersten Verbindungsabschnitt (107) der Verbindungsstruktur mit der Verbindungsstruktur,
wobei die Verbindungsstruktur zwischen dem ersten und dem zweiten Verbindungsabschnitt eine horizontal umlaufende sich in vertikaler Richtung erstreckende Wand (101) aufweist, die einen Raumbereich (105) begrenzt,
Bereitstellen zumindest einer Pumpe, wobei die zumindest eine Pumpe (135) innerhalb des Raumbereichs (105) angeordnet wird, um Meereswasser als Kühlmittel dem Aufbau zuzuführen und/oder abzuführen.

7. Verfahren gemäß dem vorangehenden Anspruch, ferner aufweisend:
innerhalb des Raumbereiches, elektrisches Verbinden eines Seekabels (127) mit einem Kabel (129) des Aufbaus.

8. Meeresinstallation nach einem der Ansprüche 1 bis 5, wobei eine Form der umlaufenden Wand (101) im Wesentlichen rechteckig oder quadratisch ist, umfassend ebene Abschnitte (113) und insbesondere abgerundeten Ecken (115).

9. Meeresinstallation nach einem der Ansprüche 1 bis 5 und 8, die Verbindungsstruktur ferner aufweisend:
einen Boden (121), der mit der Wand (101) verbunden ist und den Raumbereich (105) zumindest teilweise nach unten verschließt.

10. Meeresinstallation nach einem der Ansprüche 1 bis 5 und 8 bis 9, wobei der zweite Verbindungsabschnitt (109) einen Formübergang (155) einer Querschnittsform des Raumbereiches/der Wand zu einer Querschnittsform eines oberen Endes der Meeresgrundverankerung aufweist,
wobei der Formübergang (155) insbesondere von im Wesentlichen quadratisch oder rechteckig auf kreisförmig verläuft.

11. Meeresinstallation nach einem der Ansprüche 1 bis 5 und 8 bis 10, die Verbindungsstruktur ferner aufweisend:
zumindest einen Kabelverbinder und/oder Kabelstecker (125) innerhalb des Raumbereichs, um ein Seekabel (127) mit einem Kabel (129) des Aufbaus elektrisch zu verbinden.

12. Meeresinstallation nach einem der Ansprüche 1 bis 5 und 8 bis 11, die Verbindungsstruktur ferner aufweisend:
eine an die Wand angebrachte und außerhalb des Raumbereiches angeordnete horizontale Fläche (137); und
eine insbesondere reversibel verschließbare Öffnung (139) in der Wand, um einen Zugang von dem Raumbereich zu der horizontalen Fläche zu erlauben.

## Claims

1. Marine installation (160), comprising:
a superstructure (157) for power engineering;
a foundation (150) having:
at least one connection structure arrangement having at least two connection structures, wherein each connection structure has:
a horizontally encircling, vertically extending wall (101), which bounds a spatial region (105);
a first connecting section (107), which is designed for connection to the superstructure (157);
a second connecting section (109), which is designed for connection to the seabed anchoring means (111),
wherein the first connecting section (107) has a circumferentially completely encircling flange (117) on the wall (101) with through holes (119), through which screws for connection to the superstructure (157) can be led,
wherein at least one pump (135) is provided within the spatial region (105) in order to supply and/or to discharge seawater as a coolant to and/or from the superstructure; wherein the at least two connection structures are connected in such a way that the respective flanges (117) of the first connection sections lie substantially in a horizontal plane,
wherein the foundation furthermore has:
at least one seabed anchoring means (111), wherein a number of the connection structures are equal to a number of the seabed anchoring means, wherein the seabed anchoring means is respectively connected to the connection structure by means of the second connecting section, and
wherein the at least one connection structure is connected to the superstructure by means of the first connecting section,
wherein the superstructure comprises:
an HVDC substation, comprising an AC-DC converter module, in order to enable DC power transmission of AC power, in particular supplied by wind turbines, to a land station.

2. Marine installation according to the preceding claim, wherein the connection structure (100) is substantially below a 100-year wave level (159) and above a lowest tidal range level (161).

3. Marine installation according to either of the preceding claims, wherein the seabed anchoring means comprises:
a hollow driven pile (111), which can be driven or is driven into a seabed (153) and, in particular, has a smaller cross-sectional size than the spatial region; and/or
a suction bucket, which can be anchored or is anchored to the seabed by means of pressure difference and, in particular, has a larger cross-sectional size than the spatial region.

4. Marine installation according to one of preceding Claims 1 to 3, wherein at least one supporting wall (163) of the superstructure (157) is arranged vertically substantially in line with a section (165) of the vertical wall (101) of the connection structure (100).

5. Marine installation according to one of preceding Claims 1 to 4, further comprising:
a sea cooling facility comprising supply pipes and/or discharge pipes, which are arranged at least partially within the seabed anchoring means and/or the spatial region of the connection structure.

6. Method for building a marine installation (160) according to Claim 1,
comprising:
anchoring a seabed anchoring means (111) in the seabed (153);
connecting at least one connection structure (100) to the seabed anchoring means (111) by means of a second connecting section (109) of the connection structure, in particular in a predefined vertical position;
connecting the superstructure (157) to the connection structure by means of a first connecting section (107) of the connection structure,
wherein the connection structure has a horizontally encircling, vertically extending wall (101), which bounds a spatial region (105), between the first and the second connecting section,
providing at least one pump, wherein the at least one pump (135) is arranged within the spatial region (105) in order to supply and/or to discharge seawater as a coolant to and/or from the superstructure.

7. Method according to the preceding claim, further comprising:
within the spatial region, electrically connecting an underwater cable (127) to a cable (129) of the superstructure.

8. Marine installation according to one of Claims 1 to 5, wherein a shape of the encircling wall (101) is substantially rectangular or square, comprising planar sections (113) and, in particular, rounded corners (115).

9. Marine installation according to one of Claims 1 to 5 and 8, the connection structure further comprising:
a base (121), which is connected to the wall (101) and at least partially closes the spatial region (105) toward the bottom.

10. Marine installation according to one of Claims 1 to 5 and 8 to 9, wherein the second connecting section (109) has a shape transition (155) of a cross-sectional shape of the spatial region/the wall to a cross-sectional shape of an upper end of the seabed anchoring means,
wherein the shape transition (155) proceeds, in particular, from substantially square or rectangular to circular.

11. Marine installation according to one of Claims 1 to 5 and 8 to 10, the connection structure further comprising:
at least one cable connector and/or cable plug (125) within the spatial region in order to electrically connect an underwater cable (127) to a cable (129) of the superstructure.

12. Marine installation according to one of Claims 1 to 5 and 8 to 11, the connection structure further comprising:
a horizontal area (137) attached to the wall and arranged outside the spatial region; and
an in particular reversibly closable opening (139) in the wall in order to allow access from the spatial region to the horizontal area.

## Revendications

1. Installation (160) marine, comportant :
une construction (157) de génie énergétique ;
une fondation (150) ayant :
au moins un agencement de structure de liaison, chaque structure de liaison ayant :
une paroi (101) faisant le tour horizontalement, qui s'étend dans la direction verticale et qui délimite une région (105) de l'espace ;
une première partie (107) de liaison, constituée pour se lier à la construction (157) ;
une deuxième partie (109) de liaison, constituée pour se lier à l'ancrage (111) au fond de la mer ;
la première partie (107) de liaison ayant une bride (117) de pourtour faisant complètement le tour sur la paroi (101) avec des trous (119) traversants, dans lesquels des boulons de liaison à la construction (157) peuvent passer,
au moins une pompe (135) étant prévue à l'intérieur de la région (105) de l'espace pour apporter à la construction de l'eau de mer comme fluide de refroidissement et/ou pour en évacuer, les au moins deux structures de liaison étant reliée de manière à ce que les brides (117) respectives des premières parties de liaison se trouvent sensiblement dans un plan horizontal,
la fondation ayant, en outre :
au moins un ancrage (111) au fond de la mer, le nombre des structures de liaison étant égal au nombre des ancrages au fond de la mer, l'ancrage au fond de la mer étant relié, respectivement, à la structure de liaison par la deuxième partie de liaison, et la au moins une structure de liaison étant reliée à la construction par la première partie de liaison,
la construction comprenant :
une sous-station de haute tension et de courant continu, comprenant un module de convertisseur courant alternatif-courant continu pour un transport d'énergie en courant continu d'énergie en courant alternatif, fournie notamment par des éoliennes, à un poste sur la terre ferme.

2. Installation marine suivant la revendication précédente, dans laquelle la structure (100) de liaison se trouve sensiblement en dessous d'un niveau (159) centenaire des vagues et au dessus d'un niveau (161) le plus bas de l'amplitude de la marée.

3. Installation marine suivant l'une des revendications précédentes, dans laquelle l'ancrage au fond de la mer comprend :
un pieu (111) battu creux, qui est battu dans un fond (153) de mer ou qui peut l'être et qui a notamment une section transversale plus petite que la région de l'espace ; et/ou
un godet aspirant, qui est ancré par une différence de pression au fond de la mer ou qui peut l'être et qui a notamment une plus grande section transversale que la région de l'espace.

4. Installation marine suivant l'une des revendications 1 à 3 précédentes, dans lequel au moins une paroi (163) porteuse de la construction (157) est disposée verticalement sensiblement en ligne avec une partie (165) de la paroi (101) verticale de la structure (100) de liaison.

5. Installation marine suivant l'une des revendications 1 à 4 précédentes, comportant, en outre :
un système de refroidissement par la mer, comprenant des tuyaux d'apport et/ou des tuyaux d'évacuation, qui sont disposés, au moins en partie, dans l'ancrage au fond de la mer et/ou de la région de l'espace de la structure de liaison.

6. Procédé d'érection d'une installation (160) marine suivant la revendication 1,
comportant :
l'ancrage au fond (153) de la mer d'un ancrage (111) dans le fond de la mer ;
la liaison d'au moins une structure (100) de liaison avec l'ancrage (111) au fond de la mer par une deuxième partie (109) de liaison de la structure de liaison, notamment en une position verticale définie à l'avance ;
la liaison de la construction (157) à la structure de liaison par une première partie (107) de liaison de la structure de liaison,
la structure de liaison ayant, entre la première et la deuxième partie de liaison, une paroi (101) faisant le tour horizontalement, s'étendant dans la direction verticale et délimitant une région (105) de l'espace,
la mise à disposition d'au moins une pompe, la au moins une pompe (135) étant disposée dans la région (105) de l'espace, afin d'apporter à la construction de l'eau de mer comme fluide de refroidissement et/ou d'en évacuer.

7. Procédé suivant la revendication précédente, comportant, en outre :
dans la région de l'espace, la liaison électrique d'un câble (127) en mer à un câble (129) de la construction.

8. Installation marine suivant l'une des revendications 1 à 5, dans laquelle une forme de la paroi (101) faisant le tour est sensiblement rectangulaire ou carrée, en comprenant des parties (113) planes et notamment des coins (115) arrondis.

9. Installation marine suivant l'une des revendications 1 à 5 et 8, la structure de liaison comportant, en outre :
un fond (121), qui est relié à la paroi (101) et qui ferme la région (105) de l'espace, au moins en partie, vers le bas.

10. Installation marine suivant l'une de revendications 1 à 5 et 8 à 9, dans laquelle la deuxième partie (109) de liaison a une transition (155) de forme d'une forme de section transversale de la région de l'espace/de la paroi en une forme de section transversale d'une extrémité supérieure de l'ancrage au fond de la mer,
la transition (155) de forme allant notamment d'une forme sensiblement carrée ou rectangulaire à la forme circulaire.

11. Installation marine suivant l'une des revendications 1 à 5 et 8 à 10, la structure de liaison ayant, en outre :
au moins un connecteur de câble et/ou un enficheur (125) de câble dans la région de l'espace pour relier électriquement un câble (127) en mer à un câble (129) de la construction.

12. Installation marine suivant l'une des revendications 1 à 5 et 8 à 11, la structure de liaison comportant, en outre :
une surface (137) horizontale mise sur la paroi et disposée à l'extérieur de la région de l'espace ; et
une ouverture (139) pouvant être fermée, notamment de manière réversible, dans la paroi pour permettre un accès de la région de l'espace à la surface horizontale.
